# EUROPEAN PATENT SPECIFICATION

(11) **EP 2 537 675 B1**
(45) Date of publication and mention of the grant of the patent: **11.12.2013**
(21) Application number: 11170635.4
(22) Date of filing: 21.06.2011
(51) Int. Cl.: B41C 1/00

(54) **A curable jettable fluid for making a flexographic printing master**
Härtbare, strahlbare Flüssigkeit zur Herstellung einer flexographischen Druckvorlage
Fluide durcissable jetable pour fabriquer un support d'impression flexographique

(43) Date of publication of application: 26.12.2012
(73) Proprietor: Agfa Graphics N.V., 2640 Mortsel (BE)
(72) Inventor: Daems, Eddie, 2640 Mortsel (BE); Vanmaele, Luc, 2640 Mortsel (BE)

(56) References cited:
- EP-A1- 2 033 778
- WO-A1-2009/033936

## Description

### FIELD OF THE INVENTION

The present invention relates to a curable jettable fluid for making a flexographic printing master and to a method for making a flexographic printing master by inkjet.

### BACKGROUND OF THE INVENTION

Flexography is today one of the most important printing techniques. It is used for printing on a variety of substrates such as paper, paperboard stock, corrugated board, films, foils and laminates. Coarse surfaces and stretch films can only be printed economically with flexography, making it indeed very appropriate for packaging material printing.

Today flexographic printing masters are prepared by both analogue and digital imaging techniques. Analogue imaging typically uses a film mask through which a flexographic printing precursor is exposed. Digital imaging techniques include:
- Direct laser engraving as disclosed in e.g. EP-As 1710093 and 1936438;
- UV exposure through a LAMS mask wherein LAMS stands for Laser Ablative Mask System as disclosed in e.g. EP-A 1170121;
- Direct UV or violet exposure by laser or LED as disclosed in e.g. US6806018; and
- Inkjet printing as disclosed in e.g. EP-As 1428666 and 1637322.

The major advantage of an inkjet method for preparing a flexographic printing master is an improved sustainability due to the absence of any processing steps and the consumption of no more material as necessary to form a suitable relief image (i.e. removal of material in the non printing areas is no longer required).

EP-A 641648 discloses a method of making a photopolymer relief-type printing plate wherein a positive or negative image is formed on a substrate by inkjet printing with a photopolymeric ink, optionally preheated to a temperature between 30 and 260°C and subjecting the resulting printed substrate to UV radiation, thereby curing the ink composition forming the image.

US6520084 discloses a method of preparing flexographic printing masters by inkjet wherein a removable filler material is used to support the relief image being printed and wherein the relief image is grown in inverted orientation on a substrate. Disadvantages of this method are the removal of the filler material and the release of the relief image from the substrate.

EP-A 1428666 discloses a method of making a flexographic printing master by means of jetting subsequent layers of a curable fluid on a flexographic support. Before jetting the following layer, the previous layer is immobilized by a curing step.

In US7036430 a flexographic printing master is prepared by inkjet wherein each layer of ink is first jetted and partially cured on a blanket whereupon each such layer is then transferred to a substrate having an elastomeric floor, thereby building up the relief image layer by layer. A similar method is disclosed in EP-A 1449648 wherein a lithographic printing plate is used to transfer such layers of ink to a substrate.

US20080053326 discloses a method of making a flexographic printing master by inkjet wherein successive layers of a polymer are applied to a specific optimized substrate. In US20090197013, also disclosing an inkjet method of making a flexographic printing master, curing means are provided to additionally cure, for example, the side surfaces of the image relief being formed. In EP-A 2223803 a UV curable hot melt ink is used. Each of the deposited layers of ink is gelled before the deposition of a subsequent layer on the deposited layer. After the printing master with sufficient thickness is formed, the ink is cured.

EP-As 1637926 and 1637322 disclose a specific curable jettable fluid for making flexographic printing masters comprising a photo-initiator, a monofunctional monomer, a polyfunctional monomer or oligomer and at least 5 wt. of a plasticizer. The presence of the plasticizer is necessary to obtain a flexographic printing master having the necessary flexibility. Also in EP-A 2033778, the curable jettable fluid for making a relief image by inkjet on a sleeve body contains a plasticizer.

The unpublished EP-A 10195891.6 (filed on 20-12-2010) discloses a specific composition of a curable jettable fluid without plasticizer with which flexographic printing masters with sufficient properties can be made. The unpublished EP10195896.5 and published EP 2466380 A (both filed on 2010-12-20) disclose a curable jettable fluid comprising a copolymerizable plasticizer and/or initiating system to avoid extraction of these compounds out of the flexographic printing master by the printing inks during printing.

WO 2009/033936 discloses a method of making a flexographic printing forme comprising jetting a curable composition.

A flexographic printing master formed on a support by an inkjet method typically comprises an elastomeric floor, an optional mesa relief and an image relief as disclosed in EP-A 2199082.

To realize a high resolution with such an inkjet method, particularly for printing the image relief which determines the finally printed image, it is advantageous to use a printhead with small nozzle diameters, for example producing 3 pl fluid droplets. However, such a small nozzle diameter requires low viscosity inks.

A problem with flexographic printing masters may be their resistance to the inks used for printing. It is important that a flexographic printing master does not substantially swell due to absorption of the printing inks. When a flexographic printing master undergoes too much swelling its mechanical properties may deteriorate and a distortion of the printing relief may occur, both resulting in printing artefacts.

### SUMMARY OF THE INVENTION

It is an object of the present invention to provide a curable jettable fluid for making a flexographic printing master by inkjet wherein the printing master has excellent physical properties which do not change during printing due to absorption of printing ink.

The object of the present invention is realised with a curable jettable fluid for making a flexographic printing master by inkjet as defined in claim 1.

Preferred embodiments are defined in the dependent claims.

### BRIEF DESCRIPTION OF THE DRAWINGS

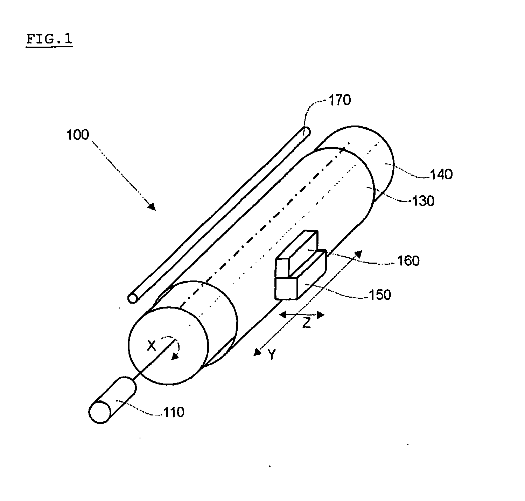

Figure 1 shows an embodiment of an apparatus for printing a flexographic printing master on a cylindrical sleeve.

### DETAILED DESCRIPTION OF THE INVENTION

A curable jettable fluid for making a flexographic printing master characterized in that the jettable fluid comprises a monofunctional (meth)acrylate monomer, a polyalkylene glycol di(meth)acrylate monomer of which the polyalkylene glycol chain has a MW of at least 300 and at least 1 wt. % relative to the total weigth of the curable jettable fluid of a difunctional (meth)acrylate monomer according to Formula I or II, 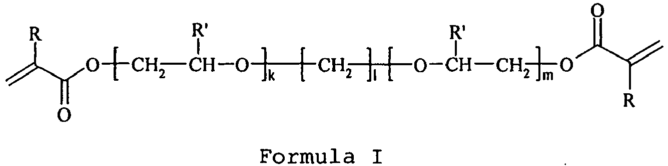 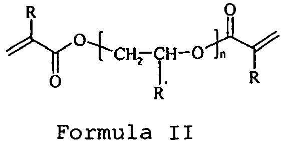
k and m in Formula I is an integer ranging from 0 to 5,
1 in Formula I is an integer ranging from 1 to 20
n in Formula II is 1, 2, 3 or 4,
R is H or CH₃, and
R' is H or an alkyl group.

The curable jettable fluid may further comprise an initiator, polymerization inhibitors, compounds which decrease oxygen inhibition during polymerization, elastomers, surfactants, colorants, solvents, humectants and/or biocides.

### Monofunctional (meth) acrylate monomer

The curable jettable fluid comprises a monofunctional (meth)acrylate monomer. Any monofunctional (meth)acrylate monomer, such as disclosed for example in EP-A 1637322, paragraph [0055], may be used.

However, the curable jettable fluid preferably comprises a cyclic monofuntional (meth)acrylate monomer. Examples of such cyclic monofunctional (meth)acrylates are isobornyl acrylate (SR506D from Sartomer), tetrahydrofurfuryl methacrylate (SR203 from Sartomer), 4-t.butylcyclohexyl arylate (Laromer TBCH from BASF), dicyclopentadienyl acrylate (Laromer DCPA from BASF), dioxalane functional acrylates (CHDOL10 and MEDOL10 from San Esters Corporation), cyclic trimethylolpropane formal acrylate (SR531 from Sartomer), 2-phenoxyethyl acrylate (SR339C from Sartomer), 2-phenoxyethyl methacrylate (SR340 from Sartomer), tetrahydrofurfuryl acrylate (SR285 from Sartomer), 3,3,5-trimethyl cyclohexyl acrylate (CD420 from Sartomer).

Particularly preferred cyclic monofunctional (meth)acrylates monomers are isobornyl acrylate (IBOA) and 4-t.butylcyclohexyl arylate (Laromer TBCH from BASF).

The amount of the cyclic monofunctional (meth)acrylate monomer is preferably at least 25 wt.%, more preferably at least 30 wt.%, relative to the total weight of the curable jettable fluid.

### Difunctional (meth) acrylate monomer according to Formula I or II

The curable jettable fluid comprises at least 1 wt.% (based on the total weight of the curable fluid) of a difunctional (meth)acrylate monomer according to Formula I or II, 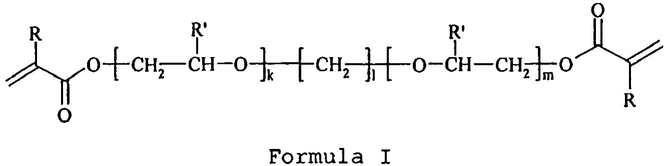 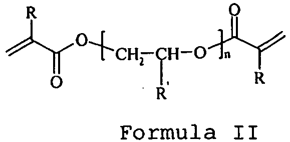 wherein
k and m in Formula I is an integer ranging from 0 to 5,
1 in Formula I is an integer ranging from 1 to 20
n in Formula II is 1, 2, 3 or 4,
R is H or CH₃, and
R' is H or an alkyl group.

Difunctional (meth)acrylate monomers according to Formula I are typically derived from diols containing an -(CH₂)- backbone. Preferred compounds according to Formula I are polyoxytetramethylene diacrylate (Blemmer ADT250); 1,9 nonanediol diacrylate; 1,6 hexanediol diacrylate (SR238); 1,6 hexanediol dimethacrylate (SR239); 1,4 butanediol diacrylate (SR213); 1,2 ethanediol dimethacrylate (SR206); 1,4 butanediol dimethacrylate (SR214); ethoxylated 1,6 hexanediol diacrylate (Miramer M202)

Difunctional (meth)acrylate monomers according to Formula II are typically derived from diols containing a glycol ether backbone. The R' group in Formula II is preferably H or methyl.

Preferred compounds according to Formula II are dipropyleneglycol diacrylate (DPGDA, SR508), diethylene glycol diacrylate (SR230), triethyleneglycol diacrylate (SR272), 1,3-butylene glycol diacrylate, 1,3-butylene glycol dimethacrylate, diethylene glycol diacrylate, diethylene glycol dimethacrylate, dipropylene glycol diacrylate, ethylene glycol dimethacrylate, tetraethylene glycol diacrylate, tetraethylene glycol dimethacrylate, triethylene glycol diacrylate, triethylene glycol dimethacrylate, tripropylene glycol diacrylate, tripropylene glycol diacrylate, and combinations thereof.

The amount of the difunctional acrylate monomer according to Formula I or II is at least 1 wt.%, preferably at least 5 wt.%, more preferably at least 7.5 wt.%, relative to the total weight of the curable jettable fluid.

### Polyalkylene glycol di(meth)acrylate monomer

The curable jettable fluid also comprises a polyalkylene glycol di(meth)acrylate monomer of which the polyalkylene glycol chain has a MW of at least 300, preferably of at least 400, most preferably of at least 500. Such compounds have two acrylate or methacrylate groups attached by an ester linkage at the opposite ends of a hydrophilic polyalkylene glycol. Typically, the longer the length of the polyalkylene chain, the softer and more flexible the obtained layer after curing.

Examples of polyalkylene glycol di(meth)acrylates that may be used in the curable jettable fluid include: polyethylene glycol (400) diacrylate, polyethylene glycol (400) dimethacrylate, polyethylene glycol (600) diacrylate, polyethylene glycol (600) dimethacrylate, polyethylene glycol dimethacrylate, polypropylene glycol (400) dimethacrylate, and combinations thereof. The number between brackets in the above list refers to the Molecular Weight (MW) of the polyalkylene chain.

Highly preferred polyalkylene glycol diacrylates are polyethylene glycol diacrylates. Specific examples of commercially available polyethylene glycol diacrylate monomers include SR344 [polyethylene glycol (400) diacrylate], SR603 [polyethylene glycol (400) dimethacrylate], SR610 [polyethylene glycol (600) diacrylate], SR252 [polyethylene glycol (600) dimethacrylate], all Sartomer products; EBECRYL 11 [poly ethylene glycol diacrylate] from Cytec; Genomer 1251 [polyethylene glycol 400 diacrylate] from Rahn. Polyethylene glycol (600) diacrylate, available as SR610 from Sartomer, is particularly preferred.

The amount of the polyalkylene glycol diacrylates is preferably at least 5 wt.%, more preferably at least 10 wt.%, relative to the total weight of the curable jettable fluid.

### Monofunctional urethane acrylate oligomer

The curable jettable fluid may further contain monofunctional urethane acrylate oligomers.

Urethane acrylates oligomers are well known and are prepared by reacting polyisocyanates with hydroxyl alkyl acrylates, usually in the presence of a polyol compound. Their functionality (i.e. number of acrylate groups) varies from 1 to 6. A lower functionality results in lower reactivity, better flexibility and a lower viscosity. The polyol compound forms the backbone of the urethane acrylate. Typically the polyol compounds are polyether or polyester compounds with a functionality (hydroxyl groups) ranging from two to four. Polyether urethane acrylates are generally more flexible, provide lower cost, and have a slightly lower viscosity and are therefore preferred.

The most preferred monofunctional urethane acrylate oligomers are monofunctional aliphatic urethane acrylates having a very low viscosity of 100 mPa.s or lower at 25°C, like for example Genomer 1122 (2-acrylic acid 2-{[(butylamino)carbonyl]oxy}ethyl ester, available from Rahn AG) and Ebecryl 1039 (available from Cytec Industries Inc.).

The total amount of the monofunctional urethane acrylate oligomer is preferably at least 5 wt.%, more preferably at least 7.5 wt.%, relative to the total weight of the curable jettable fluid.

### Other monomers or oligomers

Additional mono- or multifunctional monomers or oligomers may be used to further optimize the properties of the curable jettable fluid.

### Initiators

The curable jettable fluid comprises an initiator which, upon exposure to radiation or heat, initiates the curing, i.e. polymerization, of the jetted droplets.

However, it is also possible to carry out the curing by electron beam radiation where the presence of an initiator is not mandatory.

Preferably a photo-initiator is used which upon absorption of actinic radiation, preferably UV-radiation, forms high-energy species (for example radicals) inducing polymerization and crosslinking of the monomers and oligomers of the jetted droplets.

A combination of two or more photo-initiators may be used. A photo-initiator system, comprising a photo-initiator and a co-initiator, may also be used. A suitable photo-initiator system comprises a photo-initiator, which upon absorption of actinic radiation forms free radicals by hydrogen abstraction or electron extraction from a second compound, the co-initiator. The co-initiator becomes the actual initiating free radical.

Irradiation with actinic radiation may be realized in two steps, each step using actinic radiation having a different wavelength and/or intensity. In such cases it is preferred to use 2 types of photo-initiators, chosen in function of the different actinic radiation used.

Suitable photo-initiators are disclosed in EP-A 1637926 paragraph [0077] to [0079].

To avoid extraction of the photo-initiator out of the flexographic printing master during printing, copolymerizable photo-initiators (and/or co-initiators) such as disclosed in the unpublished EP-A 10195896.5 (filed on 2010-12-20) may be used.

A preferred total amount of initiator is 1 to 10 wt.%, more preferably 2.5 to 7.5 wt.%, of the total curable jettable liquid weight.

### Plasticizer

A plasticizer, as disclosed in for example EP-A 1637926 ([0085] - [0091]) may be added to the curable jettable fluid. Such a plasticizer is typically a substance which, when added to a flexographic printing master, increases the softness and flexibility of that printing master. However, as mentioned above, such plasticizers may migrate to the surface of the relief image or may be extracted out of the relief image by the flexo printing ink during printing. For that reason, it is preferred to use a copolymerizable plasticizing monomer such as a low Tg monomer of which the corresponding homopolymer has a glass transition temperature below -15°C or diallylphthalate, as disclosed in the EP 2466380 A.

### Inhibitors

Suitable polymerization inhibitors include phenol type antioxidants, hindered amine light stabilizers, phosphor type antioxidants, hydroquinone monomethyl ether commonly used in (meth)acrylate monomers, and hydroquinone, methylhydroquinone, t-butylcatechol, pyrogallol may also be used. Of these, a phenol compound having a double bond in molecules derived from acrylic acid is particularly preferred due to its having a polymerization-restraining effect even when heated in a closed, oxygen-free environment. Suitable inhibitors are, for example, Sumilizer^{®} GA-80, Sumilizer^{®} GM and Sumilizer^{®} GS produced by Sumitomo Chemical Co., Lid.

Since excessive addition of these polymerization inhibitors will lower the sensitivity to curing of the curable jettable liquid, it is preferred that the amount capable of preventing polymerization be determined prior to blending. The amount of a polymerization inhibitor is generally between 200 and 20 000 ppm of the total curable jettable liquid weight.

### Oxygen inhibition

Suitable combinations of compounds which decrease oxygen polymerization inhibition with radical polymerization inhibitors are: 2-benzyl-2-dimethylamino-1-(4-morpholinophenyl)-butane-1 and 1-hydroxy-cyclohexyl-phenyl-ketone; 1-hydroxy-cyclohexyl-phenyl-ketone and benzophenone; 2-methyl-1[4-(methylthio)phenyl]-2-morpholino-propane-1-on and diethylthioxanthone or isopropylthioxanthone; and benzophenone and acrylate derivatives having a tertiary amino group, and addition of tertiary amines. An amine compound is commonly employed to decrease an oxygen polymerization inhibition or to increase sensitivity. However, when an amine compound is used in combination with a high acid value compound, the storage stability at high temperature tends to be decreased. Therefore, specifically, the use of an amine compound with a high acid value compound in inkjet printing should be avoided.

Synergist additives may be used to improve the curing quality and to diminish the influence of the oxygen inhibition. Such additives include, but are not limited to ACTILANE^{®} 800 and ACTILANE^{®} 725 available from AKZO NOBEL, Ebecryl^{®} P115 and Ebecryl^{®} 350 available from UCB CHEMICALS and CD 1012, Craynor CN 386 (amine modified acrylate) and Craynor CN 501 (amine modified ethoxylated trimethylolpropane triacrylate) available from CRAY VALLEY.

The content of the synergist additive is in the range of 0 to 20 wt.%, preferably in the range of 5 to 15 wt.%, based on the total weight of the curable jettable liquid.

### Elastomeric binder

The elastomeric binder may be a single binder or a mixture of various binders. The elastomeric binder is an elastomeric copolymer of a conjugated diene-type monomer and a polyene monomer having at least two non-conjugated double bonds, or an elastomeric copolymer of a conjugated diene-type monomer, a polyene monomer having at least two non-conjugated double bonds and a vinyl monomer copolymerizable with these monomers.

Preferred elastomeric binders are disclosed in EP-A 1637926 paragraph [0092] and [0093].

However, due to their high molecular weight, the addition of elastomeric binders may cause an increase in viscosity of the jettable fluid. Therefore, the amount of elastomeric binder is preferably less than 5 wt.%. In a particular preferred embodiment, no elastomeric binder is added.

### Surfactants

The surfactant(s) may be anionic, cationic, non-ionic, or zwitterionic and are usually added in a total amount below 20 wt.%, more preferably in a total amount below 10 wt.%, each based on the total curable jettable liquid weight.

Fluorinated or silicone compounds are preferably used as a surfactant, however, a potential drawback is bleed-out after image formation because the surfactant does not cross-link. It is therefore preferred to use a copolymerizable monomer having surface-active effects, for example, silicone-modified acrylates, silicone modified methacrylates, fluorinated acrylates, and fluorinated methacrylates.

### Colorants

Colorants may be dyes or pigments or a combination thereof. Organic and/or inorganic pigments may be used.

Suitable dyes include direct dyes, acidic dyes, basic dyes and reactive dyes.

Suitable pigments are disclosed in EP-A 1637926 paragraphs [0098] to [0100].

The pigment is present in the range of 0.01 to 10 wt.%, preferably in the range of 0.1 to 5 wt.%, each based on the total weight of curable jettable liquid.

### Solvents

The curable jettable liquid preferably does not contain an evaporable component, but sometimes, it can be advantageous to incorporate an extremely small amount of a solvent to improve adhesion to the ink-receiver surface after UV curing. In this case, the added solvent may be any amount in the range of 0.1 to 10.0 wt.%, preferably in the range of 0.1 to 5.0 wt.%, each based on the total weight of curable jettable liquid.

### Humectants

When a solvent is used in the curable jettable liquid, a humectant may be added to prevent the clogging of the nozzle, due to its ability to slow down the evaporation rate of curable jettable liquid.

Suitable humectants are disclosed in EP-A 1637926 paragraph [0105]. A humectant is preferably added to the curable jettable liquid formulation in an amount of 0.01 to 20 wt.% of the formulation, more preferably in an amount of 0.1 to 10 wt.% of the formulation.

### Biocides

Suitable biocides include sodium dihydroacetate, 2-phenoxyethanol, sodium benzoate, sodium pyridinethion-1-oxide, ethyl p-hydroxybenzoate and 1,2-benzisothiazolin-3-one and salts thereof. A preferred biocide is Proxel^{®} GXL available from ZENECA COLOURS.

A biocide is preferably added in an amount of 0.001 to 3 wt.%, more preferably in an amount of 0.01 to 1.00 wt.%, each based on the total weight of the curable jettable liquid.

### Preparation of a curable jettable fluid

The curable jettable liquids may be prepared as known in the art by mixing or dispersing the ingredients together, optionally followed by milling, as described for example in EP-A 1637322 paragraph [0108]and [0109].

### Viscosity of the curable jettable fluid

In order that the curable jettable fluid can be used with printheads having small nozzle diameters, for example producing 3 pl fluid droplets, the viscosity of the curable jettable fluid at jetting temperature is less than 15 mPa.s, preferably less than 12 mPa.s, more preferably less than 10 mPa.s.

### Method of preparing a flexographic printing master

The second embodiment of the present invention is a method of preparing a flexographic printing master comprising the steps of:
- providing a flexographic support;
- jetting subsequent layers of a curable fluid as defined above on said support; and
- at least partially curing each jetted layer before the following layer is applied.

Preferred methods of preparing the flexographic printing master are disclosed in EP-As 1637322, 2199081, 2199082 and WO2008/077850 and in the unpublished EP-A 10163064.8 (filed 2010-05-18).

### Flexographic printing support

Two forms of flexographic printing supports may be used: a plate form and a cylindrical form, the latter commonly referred to as a sleeve. If the print master is created as a plate form on a flatbed inkjet device, the mounting of the plate form on a printing cylinder may introduce mechanical distortions resulting in so-called anamorphic distortion in the printed image. Such a distortion may be compensated by an anamorphic pre-compensation in an image processing step prior to halftoning. Creating the print master directly on a sheet form mounted on a print cylinder or directly on a sleeve avoids the problem of geometric distortion altogether.

Using a sleeve as support provides improved registration accuracy and faster change over time on press. Furthermore, sleeves may be well-suited for mounting on an inkjet printer having a rotating drum, as shown in Figure 1. This also makes it possible to create seamless flexographic printing sleeves, which have applications in printing continuous designs such as in wallpaper, decoration, gift wrapping paper and packaging.

The term "flexographic printing support", often encompasses two types of support:
- a support without elastomeric layers on its surface; and
- a support with one or more elastomeric layers on its surface. The one or more elastomeric layers form the so-called elastomeric floor.

In the method of the present invention, the flexographic printing support referred to is a support, preferably a sleeve, without one or more elastomeric layers forming an elastomeric floor. Such a sleeve is also referred to as a basic sleeve or a sleeve base. Basic sleeves typically consist of composites, such as epoxy or polyester resins reinforced with glass fibre or carbon fibre mesh. Metals, such as steel, aluminium, copper and nickel, and hard polyurethane surfaces (e.g. durometer 75 Shore D) can also be used. The basic sleeve may be formed from a single layer or multiple layers of flexible material, as for example disclosed by US2002466668. Flexible basic sleeves made of polymeric films can be transparent to ultraviolet radiation and thereby accommodate backflash exposure for building a floor in the cylindrical printing element. Multiple layered basic sleeves may include an adhesive layer or tape between the layers of flexible material. Preferred is a multiple layered basic sleeve as disclosed in US5301610. The basic sleeve may also be made of non-transparent, actinic radiation blocking materials, such as nickel or glass epoxy. The basic sleeve typically has a thickness from 0.1 to 1.5 mm for thin sleeves and from 2 mm to as high as 100 mm for other sleeves. For thick sleeves often combinations of a hard polyurethane surface with a low-density polyurethane foam as an intermediate layer combined with a fibreglass reinforced composite core are used as well as sleeves with a highly compressible surface present on a sleeve base. Depending upon the specific application, sleeve bases may be conical or cylindrical. Cylindrical sleeve bases are used primarily in flexographic printing.

The basic sleeve or flexographic printing sleeve is stabilized by fitting it over a steel roll core known as an air mandrel or air cylinder. Air mandrels are hollow steel cores which can be pressurized with compressed air through a threaded inlet in the end plate wall. Small holes drilled in the cylindrical wall serve as air outlets. The introduction of air under high pressure permits to float the sleeve into position over an air cushion. Certain thin sleeves are also expanded slightly by the compressed air application, thereby facilitating the gliding movement of the sleeve over the roll core. Foamed adapter or bridge sleeves are used to "bridge" the difference in diameter between the air-cylinder and a flexographic printing sleeve containing the printing relief. The diameter of a sleeve depends upon the required repeat length of the printing job.

### Apparatus for creating the flexographic printing master

Various embodiments of an apparatus for creating the flexographic printing master by inkjet printing may be used. In principle a flat bed printing device may be used, however, a drum based printing device is preferred. A particularly preferred drum based printing device using a sleeve body as flexographic support is shown in Figure 1.

### Printhead

The means for inkjet printing includes any device capable of coating a surface by breaking up a radiation curable fluid into small droplets which are then directed onto the surface. In the most preferred embodiment the radiation curable fluids are jetted by one or more printing heads ejecting small droplets in a controlled manner through nozzles onto a flexographic printing support, which is moving relative to the printing head(s). A preferred printing head for the inkjet printing system is a piezoelectric head. Piezoelectric inkjet printing is based on the movement of a piezoelectric ceramic transducer when a voltage is applied thereto. The application of a voltage changes the shape of the piezoelectric ceramic transducer in the printing head creating a void, which is then filled with radiation curable fluid. When the voltage is again removed, the ceramic returns to its original shape, ejecting a drop of fluid from the print head. However the inkjet printing method is not restricted to piezoelectric inkjet printing. Other inkjet printing heads can be used and include various types, such as a continuous type and thermal, electrostatic and acoustic drop on demand types. At high printing speeds, the radiation curable fluids must be ejected readily from the printing heads, which puts a number of constraints on the physical properties of the fluid, e.g. a low viscosity at the jetting temperature, which may vary from 25°C to 110°C and a surface energy such that the printing head nozzle can form the necessary small droplets.

An example of a printhead according to the current invention is capable to eject droplets having a volume between 0.1 and 100 picoliter (pl) and preferably between 1 and 30 pl. Even more preferably the droplet volume is in a range between 1 pl and 8 pl. Even more preferably the droplet volume is only 2 or 3 pl.

In documents EP 2420382 A, EP 2420383 A and EP 2371541 A preferred constellations of multiple printheads, preferably back to back printheads, are disclosed.

### Curing

Typically for each layer of the relief image, immediately after the deposition of a fluid droplet by the printhead the fluid droplet is exposed by a curing source. This provides immobilization and prevents the droplets to run out, which would deteriorate the quality of the print master. Such curing of applied fluid drops is often referred to as "pinning".

Curing can be "partial" or "full". The terms "partial curing" and "full curing" refer to the degree of curing, i.e. the percentage of converted functional groups, and may be determined by, for example, RT-FTIR (Real-Time Fourier Transform Infra-Red Spectroscopy) which is a method well known to the one skilled in the art of curable formulations. Partial curing is defined as a degree of curing wherein at least 5 %, preferably 10 %, of the functional groups in the coated formulation or the fluid droplet is converted. Full curing is defined as a degree of curing wherein the increase in the percentage of converted functional groups with increased exposure to radiation (time and/or dose) is negligible. Full curing corresponds with a conversion percentage that is within 10 %, preferably 5 %, from the maximum conversion percentage. The maximum conversion percentage is typically determined by the horizontal asymptote in a graph representing the percentage conversion versus curing energy or curing time. When in the present application the term "no curing" is used, this means that less than 5 %, preferably less than 2.5 %, most preferably less than 1 %, of the functional groups in the coated formulation or the fluid droplet are converted. In the method according to the present invention, applied fluid droplets which are not cured are allowed to spread or coalesce with adjacent applied fluid droplets.

Curing may be performed by heating (thermal curing), by exposing to actinic radiation (e.g. UV curing) or by electron beam curing. Preferably the curing process is performed by UV radiation.

The curing means may be arranged in combination with the inkjet printhead, travelling therewith so that the curable fluid is exposed to curing radiation very shortly after been jetted (see Figure 1, curing means 150, printhead 160). It may be difficult to provide a small enough radiation source connected to and travelling with the print head. Therefore, a static fixed radiation source may be employed, e.g. a source of UV-light, which is then connected to the printhead by means of flexible radiation conductive means such as a fibre optic bundle or an internally reflective flexible tube. Alternatively, a source of radiation arranged not to move with the print head, may be an elongated radiation source extending transversely across the flexographic printing support surface to be cured and parallel with the slow scan direction of the print head (see Figure 1, curing means 170). With such an arrangement, each applied fluid droplet is cured when it passes beneath the curing means 170. The time between jetting and curing depends on the distance between the printhead and the curing means 170 and the rotational speed of the rotating drum 140.

A combination of both curing means 150 and 170 can also be used as depicted in Figure 1.

Any UV light source, as long as part of the emitted light can be absorbed by the photo-initiator or photo-initiator system of the fluid droplets, may be employed as a radiation source, such as, a high or low pressure mercury lamp, a cold cathode tube, a black light, an ultraviolet LED, an ultraviolet laser, and a flash light. For curing the inkjet printed radiation curable fluid, the imaging apparatus preferably has a plurality of UV light emitting diodes. The advantage of using UV LEDs is that it allows a more compact design of the imaging apparatus.

UV radiation is generally classified as UV-A, UV-B, and UV-C as follows:
- UV-A: 400 nm to 320 nm
- UV-B: 320 nm to 290 nm
- UV-C: 290 nm to 100 nm

The most important parameters when selecting a curing source are the spectrum and the intensity of the UV-light. Both parameters affect the speed of the curing. Short wavelength UV radiation, such as UV-C radiation, has poor penetration capabilities and enables to cure droplets primarily on the outside. A typical UV-C light source is low pressure mercury vapour electrical discharge bulb. Such a source has a small spectral distribution of energy, with only a strong peak in the short wavelength region of the UV spectrum.

Long wavelength UV radiation, such as UV-A radiation, has better penetration properties. A typical UV-A source is a medium or high pressure mercury vapour electrical discharge bulb. Recently UV-LEDs have become commercially available which also emit in the UV-A spectrum and that have the potential to replace gas discharge bulb UV sources. By doping the mercury gas in the discharge bulb with iron or gallium, an emission can be obtained that covers both the UV-A and UV-C spectrum. The intensity of a curing source has a direct effect on curing speed. A high intensity results in higher curing speeds.

The curing speed should be sufficiently high to avoid oxygen inhibition of free radicals that propagate during curing. Such inhibition not only decreases curing speed, but also negatively affects the conversion ratio of monomer into polymer. To minimize such oxygen inhibition, the imaging apparatus preferably includes one or more oxygen depletion units. The oxygen depletion units place a blanket of nitrogen or other relatively inert gas (e.g.CO₂), with adjustable position and adjustable inert gas concentration, in order to reduce the oxygen concentration in the curing environment. Residual oxygen levels are usually maintained as low as 200 ppm, but are generally in the range of 200 ppm to 1200 ppm.

Another way to prevent oxygen inhibition is the performance of a low intensity pre-exposure before the actual curing.

A partially cured fluid droplet is solidified but still contains residual monomer. This approach improves the adhesion properties between the layers that are subsequently printed on top of each other. Partial intermediate curing is possible with UV-C radiation, UV-A radiation or with broad spectrum UV radiation. As mentioned above, UV-C radiation cures the outer skin of a fluid droplet and therefore a UV-C partially cured fluid droplet will have a reduced availability of monomer in the outer skin and this negatively affects the adhesion between neighbouring layers of the relief image. It is therefore preferred to perform the partial curing with UV-A radiation.

A final post curing however is often realized with UV-C light or with broad spectrum UV light. Final curing with UV-C light has the property that the outside skin of the print master is fully hardened.

### EXAMPLES

### Materials

All materials used in the examples were readily available from standard sources such as Aldrich Chemical Co. (Belgium) and Acros (Belgium) unless otherwise specified.
- Genomer 1122 is a low viscous monofunctional urethane acrylate (2-acrylic acid 2-(((acryl-amino)carbonyl)oxy)ethylester) from RAHN.
- Laromer TBCH is a 4-t.butyl cyclohexyl acrylate from BASF.
- SR610 is a polyethylene glycol (600) diacrylate from SARTOMER.
- Agfarad is a mixture of 4 wt.% p-methoxyphenol, 10 wt.% 2,6-di-tert-butyl-4-methylfenol and 3.6 wt.% Aluminium N-nitroso-phenylhydroxylamine (available from CUPFERRON AL) in DPGDA.
- DPGDA is a dipropylene glycol diacrylate available from UCB.
- Irgacure 819 is a UV-photoinitiator from CIBA.
- DAP is diallylphthalate from Aldrich.
- ACMO is an acryloyl morpholine from RAHN AG.
- SR230 is a diethylene glycol diacrylate from SARTOMER.
- Miramer M202 is a 1,6 hexanediol (ethoxylated)diacrylate from MIWON.
- BYK UV-3510 is a polyether modified polydimethylsiloxane from BYK Chemie.
- Irgacure 819 is a UV-photoinitiator from CIBA.
- CD561 is an alkoxylated hexanediol diacrylate from SARTOMER.
- SR489 is a tridecylacrylate from SARTOMER.
- Ebecryl 1360 is a silicone hexaacrylate from CYTEC.
- SR268US is a tetraethylene glycol diacrylate from SARTOMER.
- SR272 is a triethylene glycol diacrylate from SARTOMER.

### EXAMPLE 1

The curable fluids INV-01, INV-02 and COMP-01 to COMP-03 were prepared by mixing the ingredients listed in Table 1.

**Table 1**

| Ingredient (wt.%) | COMP-01 | COMP-02 | COMP-03 | INV-01 | INV-02 |
|---|---|---|---|---|---|
| Laromer TBCH | 47.00 | 47.00 | 47.00 | 41.18 | 41.18 |
| ACMO | 4.00 | 4.00 | 4.00 | 3.64 | 3.64 |
| SR610 | 21.00 | - | - | 21.00 | 21.00 |
| SR230 | - | 21.00 | - | 10.00 | - |
| Miramer M202 | - | - | 21.00 | - | 10.00 |
| Genomer 1122 | 12.00 | 12.00 | 12.00 | 9.09 | 0.09 |
| DAP | 10.00 | 10.00 | 10.00 | 9.09 | 9.09 |
| Agfarad | 0.70 | 0.70 | 0.70 | 0.70 | 0.70 |
| Irgacure 819 | 5.00 | 5.00 | 5.00 | 5.00 | 5.00 |
| BYK UV-3510 | 0.30 | 0.30 | 0.30 | 0.30 | 0.30 |

To evaluate the usefulness as UV curable fluid for making a flexographic printing master by means of inkjet, the viscosity of the fluids and the hardness, elongation at break, creep recovery, solvent resistance and the pliability (or flexibility) of the cured fluids were evaluated.

### Viscosity

The viscosity of the curable jettable fluids was measured with a Brookfield DV-II+Pro viscometer using the programs 6T (25°C, 6 rpm) and 12T (45°C, 12 rpm).

### Hardness Determination

Standard measurements of the hardness of various substances are currently performed using durometer hardness test procedures, such as those set forth in ASTM D2240. The durometer hardness procedures are used for determining indentation hardness of various substances, and are particularly useful for elastomeric materials. These test methods measure the depression force of a specific type of indentor as it is forced under specific conditions against the material's surface. Due to the various parameters which influence hardness determinations, different durometer scales have been established. A particular scale is chosen depending on the type of material to be measured. For example, materials which are relatively soft, such as elastomeric materials, are measured on a Shore A scale. Shore A scale measurements use a steel rod indentor shaped with a blunt end, and a calibrated spring force. The indentor descends at a controlled rate against the specimen surface and a reading is recorded within a specified time period. This procedure is repeated multiple times at different positions on the specimen and the arithmetic mean of the results yields the Shore A measurement.

The samples to be measured were prepared as follows. A petri dish made out of polystyrene and having a diameter of 5.6 cm was filled with 10 g of the curable fluid.

The filled petri dish was placed in a quartz glass box filled up with Nitrogen. The samples were exposed with UV-A light in a light box equipped with 8 Philips TL 20W/10 UVA (λₘₐₓ = 370 nm) lamps during 10 minutes. The distance between the lamps and the sample was approximately 10 cm. Subsequently the samples were back exposed (through the petri dish) during 10 minutes. Without releasing the disk-shaped UV-A cured fluids from of the petri dish, a UV-C post-curing (also making use of the quartz box filled with nitrogen) was carried out. The post-curing was carried out in a light-box equipped with 4 Philips TUV (λₘₐₓ = 254 nm) lamps during 20 minutes.

Assuming that the specific weight of the curable fluid was approximately 1.015 g/ml, the thickness of the cured samples in the petri dish was ± 4 mm (volumetric shrinkage during curing not taken in account).

The Shore A hardness of the cured samples was then measured with an Elcometer 3120 Shore Durometer.

### Elongation at break

Elongation at break of the cured ink coating, expressed as a percentage compared to the initial length at rest, corresponds to the maximum elongation that can be obtained prior to breaking of the cured ink coating.

Strips (± 8 cm x 1 cm) were prepared by coating, at a thickness of 10 µm, the UV curable fluid on a flexible Metamark MD5-100 support from METAMARK. Curing was carried out under nitrogen in a UV-A light box equipped with 8 Philips TL 20W/10 UVA (λₘₐₓ = 370 nm) lamps for 2 minutes. The distance between the lamps and the sample was approx. 10 cm. After this step, a UV-C post-treatment step was carried out. UV-C post-curing was carried out in a light-box equipped with 4 Philips TUV lamps (λₘₐₓ = 254 nm) under nitrogen for 20 minutes.

A strip was placed on two supports: one support was fixed, the other movable by being connected to a screw-thread. The initial length (L1) between the two supports (and thus of the mounted strip) is 5 cm.

Then, the strip is stretched by increasing the length between the two supports, via the screw-tread, until cracks are visually observed in the coated layer (L2).

The elongation at break is then (L2 - L1 / L1) x 100. For each sample, two measurements were carried out.

### Creep recovery after static compression

Creep recovery reflects the resistance of a material to deform permanently to relieve stresses. To determine creep properties, a sample is subjected to prolonged constant tension or compression at constant temperature. Deformation is recorded at specified time intervals and a creep vs. time diagram is plotted. The slope of the curve at any point is the creep rate. If the specimen does not fracture within the test period, the creep recovery can be measured.

A circular cured sample of the curable jettable liquid (prepared as described for the T-bone sample in the elongation at break test method), having a diameter of 6.2 mm and a thickness of 0.38 mm, was deformed in a Texas Instruments DMA 2980 (dynamic mechanical analysis) apparatus with a ball point probe having a diamter of 2.7 mm during 5 minutes with a set pressure of 0.005 MPa.

After release of the pressure, creep recovery is determined after 1.2 s, the shortest measurable recovery time.

The results of these measurements are given in Table 2.

Good results are obtained when:
- The hardness (Shore A) is less than 80
- The elongation at break is at least 60%
- The creep recovery is higher than 70% after 1.2 seconds.

### Solvent Resistance

Ink and solvent compatibilities is also an important requirement for flexographic printing masters. The flexographic printing masters should at least be compatible with water, glycol and alcohol based inks, containing up to 25% ethyl- and/or propyl-acetate. The compatibility with UV-curable inks, oil-based inks and inks containing hydrocarbon solvents should also be checked.

Such a compatibility test was carried out as follows:
- The curable fluid was coated on a Lumirror X43 film at a thickness of approx. 0.6mm and fully cured under nitrogen atmosphere in a UV-A light box equipped with 8 Philips TL 20W/10 UVA (λmax = 370 nm) lamps for 5 minutes. The distance between the lamps and the sample was approx. 10 cm. After this step, a UV-C post-treatment step was carried out. UV-C post-curing was carried out under nitrogen for 20 minutes in a light-box equipped with 4 Philips TUV lamps (λmax = 254 nm). After curing, the UV hardened layer was peeled off from the Lumirror X43 support and the thickness of the cured layer was measured with a Mitutoyo digital thickness gauge.

- A section of the sample was immersed in the solvent to be tested during 24 hrs.
- The sample was removed from the solvent.
- After blotting the sample dry, the thickness of the coating was measured again.

When the coating thickness after immersion in the particular solvent changed more than 10 %, the solvent was considered incompatible with the cured coating.

Compatibility with the following solvents were checked.

| Ingredients | solvent | | | | |
|---|---|---|---|---|---|
| | 1 | 2 | 3 | 4 | 5 |
| n-propanol | 26.3 % | - | - | - | - |
| isopropanol | 26.3 % | 4.1 % | 4.4% | - | - |
| n-propyl acetate | 13.2 % | 3.2 % | - | - | - |
| ethanol | 4.0 % | 24.9 % | - | - | - |
| Prop Gly methyl ester | 26.3 % | - | - | - | - |
| Prop Gly n-butyl ester | 4.0 % | - | - | - | |
| ethylacetate | - | 3.7 % | - | - | - |
| 1-propoxy-2-propanol | - | 64.1 % | 95.6 % | - | - |
| DPGDA | - | - | - | - | 100 % |
| water | - | - | - | 100 % | - |

Solvents mixture 1 through 3 represent different solvent mixtures often used in solvent-based flexo inks.

### Flexibility

The samples were prepared by coating the curable fluids at a thickness of 290 mm on a subbed polyester support. The sample was then placed in a quartz glass box filled with nitrogen gas before curing. UV-A curing was carried out with a UV-A Light box equipped with 8 Philips TL 20W/10 UVA lamps (λₘₐₓ = 370nm). The distance between the lamp and the sample was ± 10cm. The curing time was 2 minutes. The UV-A cured coating was then post cured with UV-C light. The UV-C post-curing was carried out with a light-box equipped with 4 Philips TUV lamps (λₘₐₓ = 254 nm). The post-curing was also performed under N₂ and the curing time was 20 minutes.

The samples were then folded back (180° bending) in order to judge the flexibility properties of the coating with a loupe. Flexibility was rated from 0 to 5 according to the following criteria.
- Very easy to bend 0
- Easy to bend 1
- Flexible 2
- Hard to bend 3
- Very hard to bend 4
- Inflexible 5

To ensure good properties of the flexographic printing master, the flexibility as measured above has to be ≤ 2.

To ensure optimal printing properties of the flexographic printing master, the curable fluids must have the following characteristics obtained by the methods described above:
- Hardness: < 80 Shore A
- Elongation at Break: > 60 %
- Creep recovery: ≥ 70 %
- Solvent resistance: swelling in solvents 1, 2, 3 and 5 < 10%
- Flexibility: ≤ 2

The results are shown in Table 2

**Table 2**

| | hardness (Shore A) | elongation at break | creep recovery | solvent resistance | flexibility |
|---|---|---|---|---|---|
| COMP-01 | OK | OK | OK | NOK | OK |
| COMP-02 | NOK | OK | NOK | OK | NOK |
| COMP-03 | NOK | OK | OK | OK | NOK |
| INV-01 | OK | OK | OK | OK | OK |
| INV-02 | OK | OK | OK | OK | OK |

It is clear from the results of Table 2 that the solvent resistance becomes OK when at least 1 wt.% of a difunctional acrylate monomer according to Formula I or II is present. In all examples, approximately 0.6 wt.% of dipropyleneglycoldiacrylate (DPGDA) is present (Agfarad contains 82.4 wt.% DPGDA). It is therefore clear from COMP-01 that at least 1 wt.% of a difunctional acrylate monomer according to Formula I or II has to be present to observe improvements regarding solvent resistance.

It is also clear from the results, that only when also a polyalkylene glycol diacrylate monomer having a MW of more than 300 is present (INV-01 and 02), the mechanical properties are also sufficient.

### EXAMPLE 2

The curable fluids INV-03 to INV-06 and COMP-04 were prepared by mixing the ingredients listed in Table 3.

**Table 3**

| Ingredient (wit.%) | COMP-04 | INV-03 | INV-04 | INV-05 | INV-06 |
|---|---|---|---|---|---|
| Laromer TBCH | 47.90 | 41.60 | 38.50 | 41.60 | 41.18 |
| SR610 | 15.10 | 13.10 | 12.10 | 13.10 | 12.40 |
| Miramer M202 | - | 11.00 | 11.00 | - | - |
| CD561 | - | - | - | 11.00 | 11.00 |
| Genomer 1122 | | 17.40 | 16.00 | 17.40 | 16.50 |
| DAP | 11.10 | 11.10 | 11.10 | 11.10 | 11.10 |
| SR489 | - | - | 5.50 | - | - |
| Agfarad | 0.70 | 0.70 | 0.70 | 0.70 | 0.70 |
| BAPO | 5.00 | 5.00 | 5.00 | 5.00 | 5.00 |
| Ebecryl 1360 | 0.04 | 0.04 | 0.30 | 0.30 | 0.30 |

To evaluate the usefulness as UV curable fluid for making a flexographic printing master by means of inkjet, the viscosity of the fluids and the hardness, elongation at break, creep recovery, solvent resistance and the pliability (or flexibility) of the cured fluids were evaluated, as described under example 1.

The results are shown in Table 4.

**Table 4**

| | hardness (Shore A) | elongation at break | creep recovery | solvent resistance | flexibility |
|---|---|---|---|---|---|
| COMP-04 | OK | OK | OK | NOK | OK |
| INV-03 | OK | OK | OK | OK | OK |
| INV-04 | OK | OK | OK | OK | OK |
| INV-05 | OK | OK | OK | OK | OK |
| INV-06 | OK | OK | OK | OK | OK |

It is clear from Table 4 that all inventive examples are characterized by an improved solvent resistance.

### EXAMPLE 3

The curable fluids INV-07 to INV-14 were prepared by mixing the ingredients listed in Table 5.

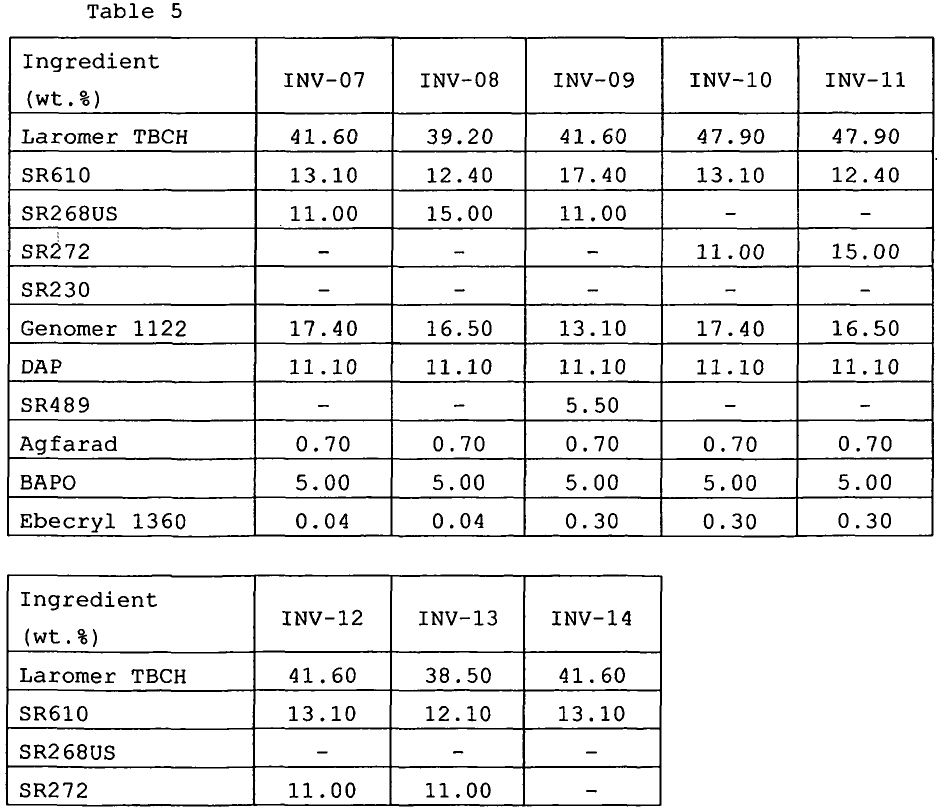

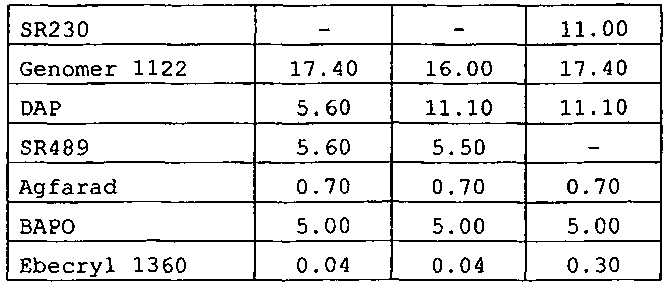

To evaluate the usefulness as UV curable fluid for making a flexographic printing master by means of inkjet, the viscosity of the fluids and the hardness, elongation at break, creep recovery, solvent resistance and the pliability (or flexibility) of the cured fluids were evaluated, as described under example 1.

The results are shown in Table 6.

**Table 6**

| | hardness (Shore A) | elongation at break | creep recovery | solvent resistance | flexibility |
|---|---|---|---|---|---|
| INV-07 | OK | OK | OK | OK | OK |
| INV-08 | OK | OK | OK | OK | OK |
| INV-09 | OK | OK | OK | OK | OK |
| INV-10 | OK | OK | OK | OK | OK |
| INV-11 | OK | OK | OK | OK | OK |
| INV-12 | ± OK | ± OK | ± OK | OK | OK |
| INV-13 | OK | OK | OK | OK | OK |
| INV-14 | OK | OK | OK | OK | OK |

It is clear from the results of Table 6 that all inventive examples have a good solvent resistance.

## Claims

1. A curable jettable fluid for making a flexographic printing master **characterized in that** the jettable fluid comprises a monofunctional (meth)acrylate monomer, a polyalkylene glycol di(meth)acrylate monomer of which the polyalkylene glycol chain has a MW of at least 300 and at least 1 wt.% relative to the total weight of the curable jettable fluid of difunctional (meth)acrylate monomer according to Formula I or II, 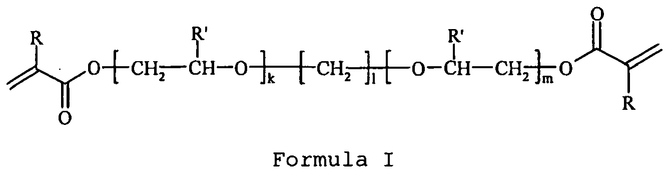 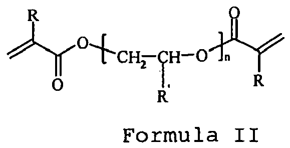
k and m in formula I is an integer ranging from 0 to 5,
1 in Formula I is an integer ranging from 1 to 20
n in Formula II is 1, 2, 3 or 4,
R is H or CH₃, and
R' is H or an alkyl group.

2. The curable jettable fluid according to claim 1 wherein the amount of the difunctional (meth)acrylate monomer according to Formula I or II is at least 5 wt.% relative to the total weight of the curable jettable fluid.

3. The curable jettable fluid according to claim 1 or 2 wherein the amount of the difunctional (meth)acrylate monomer according to Formula I or II is at least 7.5 wt.% relative to the total weight of the curable jettable fluid.

4. The curable jettable fluid according to any of the preceding claims wherein the polyalkylene glycol diacrylate monomer has a MW of at least 400.

5. The curable jettable fluid according to any of the preceding claims wherein the jettable fluid has a viscosity, measured at jetting temperature, of less than 15 mPa.s.

6. The curable jettable fluid according to any of the preceding claims wherein the polyalkylene glycol di(meth)acrylate monomer is a polyethylene glycol di(meth)acrylate monomer.

7. The curable jettable fluid according to any of the preceding claims wherein the monofunctional (meth)acrylate monomer is a cyclic (meth)acrylate monomer.

8. The curable jettable fluid according to claim 7 wherein the cyclic monofunctional (meth)acrylate monomer is isobornyl acrylate or 4-t.butyl cyclohexyl acrylate.

9. The curable jettable fluid according to any of the preceding claims further comprising a monofunctional urethane acrylate oligomer.

10. The curable jettable fluid according to claim 9 wherein the monofunctional urethane acrylate oligomer is an aliphatic urethane acrylate.

11. The curable jettable fluid according to any of the preceding claims wherein the jettable fluid further comprises an initiator.

12. The curable jettable fluid according to claim 11 wherein the initiator is a photo-initiator.

13. A method of preparing a flexographic printing master comprising the steps of:
- providing a flexographic support;
- jetting subsequent layers of a curable fluid as defined in any of the claims 1 to 12 on the flexographic support; and
- at least partially curing each jetted layer before a following layer is applied.

14. The method according to claim 13 wherein the support is a basic sleeve.

## Patentansprüche

1. Härtbare aufspritzbare Flüssigkeit zur Herstellung eines flexografischen Druckmasters, **dadurch gekennzeichnet, dass** die aufspritzbare Flüssigkeit ein monofunktionelles (Meth)acrylatmonomer, ein Polyalkylenglycoldi(meth)acrylatmonomer, dessen Polyalkylenglycolkette einen MW von mindestens 300 hat, und mindestens 1 Gew.-%, bezogen auf das Gesamtgewicht der härtbaren aufspritzbaren Flüssigkeit, eines difunktionellen (Meth)acrylatmonomers gemäß Formel I oder II enthält, 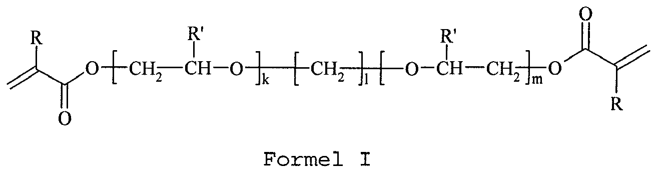 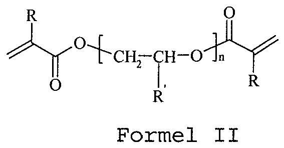 in denen :
k und m in Formel I eine ganze Zahl zwischen 0 und 5 bedeuten,
1 in Formel I eine ganze Zahl zwischen 1 und 20 bedeutet,
n in Formel II 1, 2, 3 oder 4 bedeutet,
R H oder CH₃ bedeutet, und
R' H oder eine Alkylgruppe bedeutet.

2. Härtbare aufspritzbare Flüssigkeit nach Anspruch 1, **dadurch gekennzeichnet, dass** die Menge des difunktionellen (Meth)acrylatmonomers gemäß Formel I oder II bei mindestens 5 Gew.-%, bezogen auf das Gesamtgewicht der härtbaren aufspritzbaren Flüssigkeit, liegt.

3. Härtbare aufspritzbare Flüssigkeit nach Anspruch 1 oder 2, **dadurch gekennzeichnet, dass** die Menge des difunktionellen (Meth)acrylatmonomers gemäß Formel I oder II bei mindestens 7,5 Gew.-%, bezogen auf das Gesamtgewicht der härtbaren aufspritzbaren Flüssigkeit, liegt.

4. Härtbare aufspritzbare Flüssigkeit nach einem der vorstehenden Ansprüche, **dadurch gekennzeichnet, dass** das Polyalkylenglycoldiacrylatmonomer einen MW von mindestens 400 hat.

5. Härtbare aufspritzbare Flüssigkeit nach einem der vorstehenden Ansprüche, **dadurch gekennzeichnet, dass** die aufspritzbare Flüssigkeit eine bei Aufspritztemperatur gemessene Viskosität von weniger als 15 mPa.s hat.

6. Härtbare aufspritzbare Flüssigkeit nach einem der vorstehenden Ansprüche, **dadurch gekennzeichnet, dass** das Polyalkylenglycoldi(meth)acrylatmonomer ein Polyethylenglycoldi(meth)acrylatmonomer ist.

7. Härtbare aufspritzbare Flüssigkeit nach einem der vorstehenden Ansprüche, **dadurch gekennzeichnet, dass** das monofunktionelle (Meth)acrylatmonomer ein cyclisches (Meth)acrylatmonomer ist.

8. Härtbare aufspritzbare Flüssigkeit nach Anspruch 7, **dadurch gekennzeichnet, dass** das cyclische monofunktionelle (Meth)acrylatmonomer Isobornylacrylat oder 4-t.Butylcyclohexylacrylat ist.

9. Härtbare aufspritzbare Flüssigkeit nach einem der vorstehenden Ansprüche, die ferner ein monofunktionelles Urethanacrylatoligomer enthält.

10. Härtbare aufspritzbare Flüssigkeit nach Anspruch 9, **dadurch gekennzeichnet, dass** das monofunktionelle Urethanacrylatoligomer ein alifatisches Urethanacrylat ist.

11. Härtbare aufspritzbare Flüssigkeit nach einem der vorstehenden Ansprüche, **dadurch gekennzeichnet, dass** die aufspritzbare Flüssigkeit ferner einen Initiator enthält.

12. Härtbare aufspritzbare Flüssigkeit nach Anspruch 11, **dadurch gekennzeichnet, dass** der Initiator ein Fotoinitiator ist.

13. Verfahren zur Herstellung eines flexografischen Druckmasters, das die folgenden Schritte umfasst :
- Schaffen eines flexografischen Trägers,
- Aufspritzen aufeinanderfolgender Schichten einer nach einem der Ansprüche 1 bis 12 definierten härtbaren Flüssigkeit auf den flexografischen Träger, und
- mindestens teilweises Härten jeder aufgespritzten Schicht, ehe eine folgende Schicht aufgetragen wird.

14. Verfahren nach Anspruch 13, **dadurch gekennzeichnet, dass** der Träger eine elementare Hülse ist.

## Revendications

1. Fluide applicable par jet durcissable pour la confection d'une matrice d'impression flexographique, **caractérisé en ce que** le fluide applicable par jet contient un monomère de (méth)acrylate monofonctionnel, un monomère de di(méth)acrylate de polyalkylène glycol dont la chaîne de polyalkylène glycol présente une valeur MW minimale de 300, et au moins 1% en poids, par rapport au poids total du fluide applicable par jet durcissable, d'un monomère de (méth)acrylate difonctionnel répondant à la Formule I ou II, 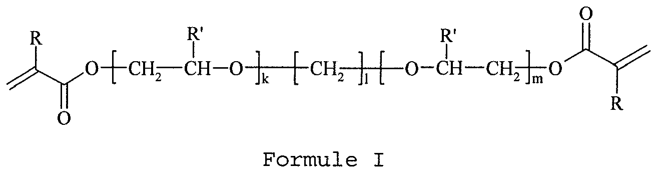 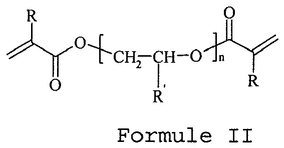 où :
k et m dans la Formule I représentent un nombre entier de 0 à 5,
1 dans la Formule I représente un nombre entier de 1 à 20,
n dans la Formule II représente 1, 2, 3 ou 4,
R représente H ou CH₃, et
R' représente H ou un groupe alkyle.

2. Fluide applicable par jet durcissable selon la revendication 1, **caractérisé en ce que** la quantité du monomère de (méth)acrylate difonctionnel répondant à la Formule I ou II s'élève à au moins 5% en poids par rapport au poids total du fluide applicable par jet durcissable.

3. Fluide applicable par jet durcissable selon la revendication 1 ou 2, **caractérisé en ce que** la quantité du monomère de (méth)acrylate difonctionnel répondant à la Formule I ou II s'élève à au moins 7,5% en poids par rapport au poids total du fluide applicable par jet durcissable.

4. Fluide applicable par jet durcissable selon l'une quelconque des revendications précédentes, **caractérisé en ce que** le monomère de diacrylate de polyalkylène glycol présente une valeur MW d'au moins 400.

5. Fluide applicable par jet durcissable selon l'une quelconque des revendications précédentes, **caractérisé en ce que** le fluide applicable par jet présente une viscosité, mesurée à la température d'éjection, inférieure à 15 mPa.s.

6. Fluide applicable par jet durcissable selon l'une quelconque des revendications précédentes, **caractérisé en ce que** le monomère de di(méth)acrylate de polyalkylène glycol est un monomère de di(méth)acrylate de polyéthylène glycol.

7. Fluide applicable par jet durcissable selon l'une quelconque des revendications précédentes, **caractérisé en ce que** le monomère de (méth)acrylate monofonctionnel est un monomère de (méth)acrylate cyclique.

8. Fluide applicable par jet durcissable selon la revendication 7, **caractérisé en ce que** le monomère de (méth)acrylate monofonctionnel cyclique est l'acrylate d'isobornyle ou l'acrylate de 4-t.butylcyclohexyle.

9. Fluide applicable par jet durcissable selon l'une quelconque des revendications précédentes, contenant en outre un oligomère d'acrylate d'uréthane monofonctionnel.

10. Fluide applicable par jet durcissable selon la revendication 9,
**caractérisé en ce que** l'oligomère d'acrylate d'uréthane monofonctionnel est un acrylate d'uréthane aliphatique.

11. Fluide applicable par jet durcissable selon l'une quelconque des
revendications précédentes, **caractérisé en ce que** le fluide applicable par jet contient en outre un initiateur.

12. Fluide applicable par jet durcissable selon la revendication 11,
**caractérisé en ce que** l'initiateur est un photoinitiateur.

13. procédé pour la confection d'une matrice d'impression flexographique, comprenant les étapes consistant à :
- mettre à disposition un support flexographique,
- appliquer, par jet, des couches consécutives d'un fluide durcissable tel que défini selon l'une quelconque des revendications 1 à 12 sur le support flexographique, et
- durcir au moins partiellement chaque couche appliquée par jet avant d'appliquer une couche suivante.

14. procédé selon la revendication 13, **caractérisé en ce que** le support est un manchon élémentaire.
